# EUROPEAN PATENT APPLICATION

(11) **EP 4 841 759 A1**
(43) Date of publication of application: **18.11.2026**
(21) Application number: 26157940.3
(22) Date of filing: 11.02.2026
(51) Int. Cl.: H01M 50/103, H01M 50/15, H01M 50/503, H01M 50/548, H01M 50/553, H01M 50/55

(54) **BATTERY MODULE**

(30) Priority: 16.05.2025 KR 20250063938
(71) Applicant: SAMSUNG SDI CO., LTD., Yongin-si, Gyeonggi-do 17084 (KR)
(72) Inventor: CHUNG, WOOJOON, 17084 YONGIN-SI (KR)
(74) Representative: Regimbeau

(57) **Abstract**

A battery module, including a plurality of battery cells (10) each having a first terminal (11) and a second terminal (12) respectively with different polarities, and a bus bar (20) electrically connecting the plurality of battery cells (10) to each other, wherein each of the battery cells (10) has an upper surface of square shape, and the first terminal (11) and the second terminal (12) are symmetrical with respect to the center of the upper surface.

## Description

### FIELD

The present disclosure relates to a battery module.

### TECHNICAL BACKGROUND

Secondary batteries, unlike primary batteries that cannot be recharged, are batteries which can be repeatedly charged and discharged. Low-capacity secondary batteries are used in small portable electronic devices such as smartphones, feature phones, laptop computers, digital cameras, and camcorders, and high-capacity secondary batteries are widely used as power sources for driving motors in hybrid cars, electric cars, and as batteries for power storage. These secondary batteries include an electrode assembly including a positive electrode and a negative electrode, a case accommodating the electrode assembly, and an electrode terminal connected to the electrode assembly.

The information disclosed in the background is only for enhancing understanding of the background of the present disclosure, and therefore may include information that does not constitute prior art.

### SUMMARY

Embodiments include a battery module, including a plurality of battery cells each including a first terminal and a second terminal respectively having different polarities, and a bus bar electrically connecting the plurality of battery cells to each other, wherein each of the plurality of battery cells has an upper surface having a square shape, and the first terminal and the second terminal are symmetrical with respect to a center of the upper surface.

The plurality of battery cells may include a first battery cell and a second battery cell which are adjacent to each other, and the second battery cell has a shape of the first battery cell rotated by 90 degrees.

The first battery cell and the second battery cell may each include a first electrode plate, a second electrode plate facing the first electrode plate, and a separator between the first electrode plate and the second electrode plate.

A stacking direction of the first electrode plate, the second electrode plate and the separator of the first battery cell may be perpendicular to a stacking direction of the first electrode plate, the second electrode plate and the separator of the second battery cell.

A swelling direction of the first battery cell and a swelling direction of the second battery cell may be perpendicular to each other.

Among the plurality of battery cells, two battery cells at outermost positions may each include terminals.

The plurality of battery cells may be in a row along a first direction, and terminals included in each of the two battery cells are on a same side with respect to a virtual line that is parallel to the first direction and passes through centers of the plurality of battery cells.

The plurality of battery cells may be in a row along a first direction, and terminals included in each of the two battery cells may be on an opposite side with respect to a virtual line that is parallel to the first direction and passes through centers of the plurality of battery cells.

The plurality of battery cells may be connected to each other in series.

The plurality of battery cells may include a plurality of rows in parallel along a first direction, and the plurality of rows may be in parallel to each other along a second direction perpendicular to the first direction.

Embodiments include a battery module, including a first battery cell and a second battery cell adjacent to each other, and a bus bar electrically connecting the first battery cell to the second battery cell, wherein each of the first battery cell and the second battery cell has an upper surface having a square shape, and the second battery cell has a shape of the first battery cell rotated by 90 degrees.

Each of the first battery cell and the second battery cell may include a first terminal and a second terminal respectively having different polarities, and the first terminal and the second terminal may be symmetrical with respect to a center of the upper surface.

The bus bar connects the first terminal of the first battery cell to the second terminal of the second battery cell.

The first battery cell and the second battery cell may be alternated along a first direction.

When a number of a plurality of battery cells along the first direction is an odd number, terminals of the battery module may be on an opposite side with respect to a virtual line that is parallel to the first direction and passes through centers of the plurality of battery cells.

When a number of a plurality of battery cells along the first direction is an even number, terminals of the battery module may be on a same side with respect to a virtual line parallel to the first direction, the terminals passing through centers of the plurality of battery cells.

The plurality of battery cells may include a plurality of rows in parallel along a first direction, and the rows may be in parallel to each other along a second direction perpendicular to the first direction.

A swelling direction of the first battery cell and a swelling direction of the second battery cell may be perpendicular to each other.

The first battery cell and the second battery cell may each include a first electrode plate, a second electrode plate facing the first electrode plate, and a separator between the first electrode plate and the second electrode plate.

A stacking direction of the first electrode plate, the second electrode plate and the separator of the first battery cell may be perpendicular to a stacking direction of the first electrode plate, the second electrode plate and the separator of the second battery cell.

### BRIEF DESCRIPTION OF THE DRAWINGS

Features will become apparent to those of ordinary skill in the art by describing in detail exemplary embodiments with reference to the attached drawings, in which:
FIG. 1 is a perspective view schematically illustrating a battery module according to an embodiment of the present disclosure;
FIG. 2 is a perspective view schematically illustrating an example of a battery cell of the battery module of FIG. 1;
FIG. 3 is a cross-sectional view schematically illustrating an example of a cross-section taken along line III-III' of FIG. 2;
FIG. 4 is a plan view schematically illustrating an example of a first battery cell and a second battery cell according to an embodiment of the present disclosure;
FIG. 5 is a plan view schematically illustrating an example of an arrangement of battery cells of a battery module according to an embodiment of the present disclosure;
FIG. 6 is a plan view schematically illustrating an example of an arrangement of battery cells of a battery module according to another embodiment of the present disclosure; and
FIG. 7 is a plan view schematically illustrating an example of an arrangement of battery cells of a battery module according to a further embodiment of the present disclosure.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

In some embodiments, when used in the description, "comprise," "include," "comprising," and/or "including" specify the presence of the mentioned features, numbers, steps, operations, elements, components and/or groups thereof, but do not preclude the presence or addition of one or more other features, numbers, operations, elements, components and/or groups thereof.

Although the terms "first," "second," etc. are used to describe various components, these components are not limited by these terms. These terms are used only to distinguish one component from another, and the first component may also be the second component, unless described otherwise in the context.

Throughout the description, each component may be singular or plural, unless described otherwise in the context.

The expression that a configuration is positioned "on (or below)" the "top (or bottom)" of a component may mean not only that the configuration is positioned in contact with the top or bottom surface of the component, but also that one or more other configurations may be interposed between the component and the configuration positioned on (or below) the component.

In some embodiments, when a component is described as being "coupled," "connected," or "contacted" to another component, it should be understood that the components may be directly connected or contacted to each other, but that other components may also be "interposed" between each component, or that each component may be "coupled," "connected," or "contacted" through another component. Also, when a part is electrically coupled to another part, it includes not only that they are directly connected, but also that they are connected with another element in between.

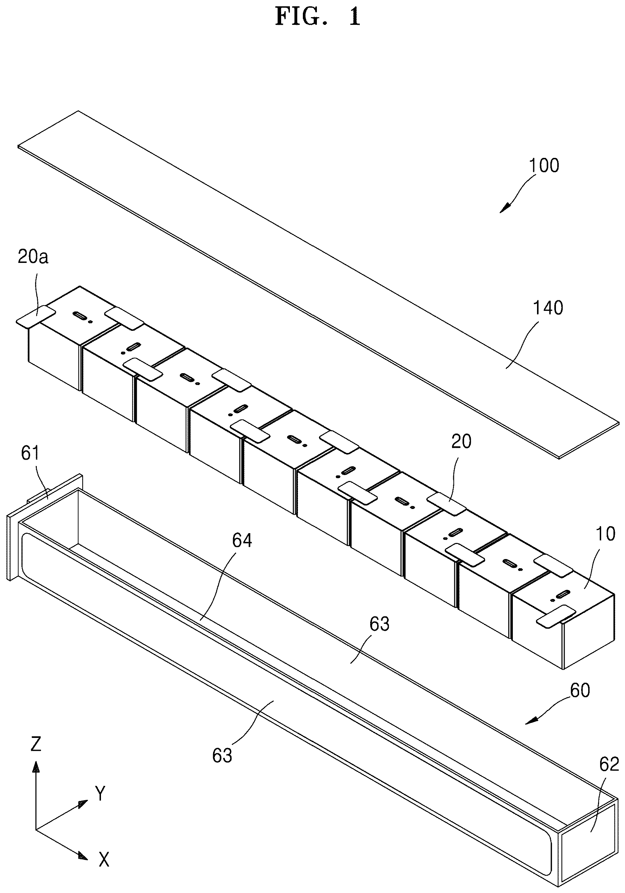

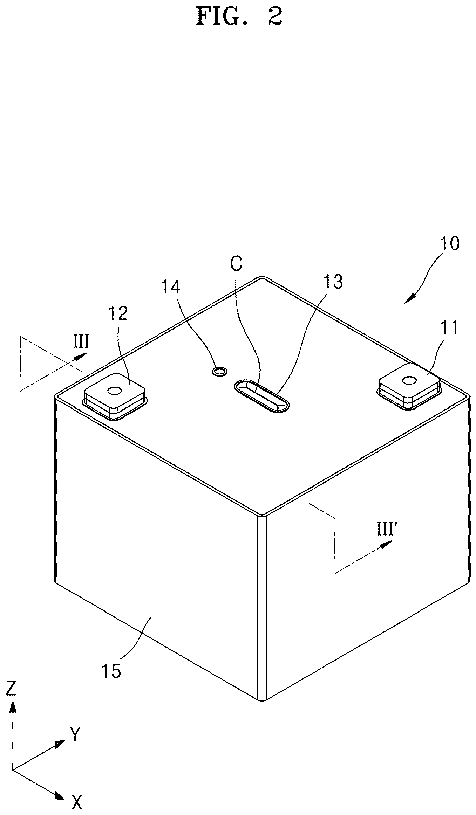

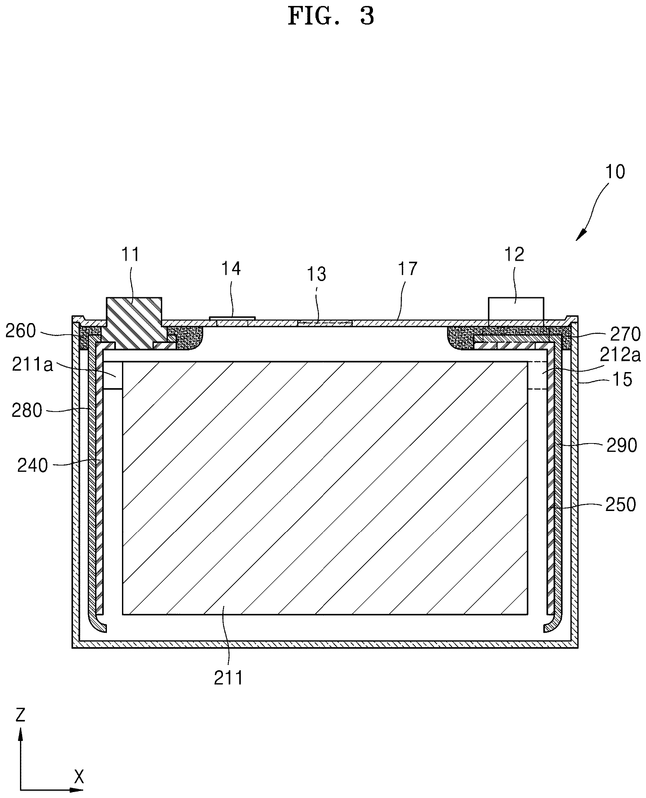

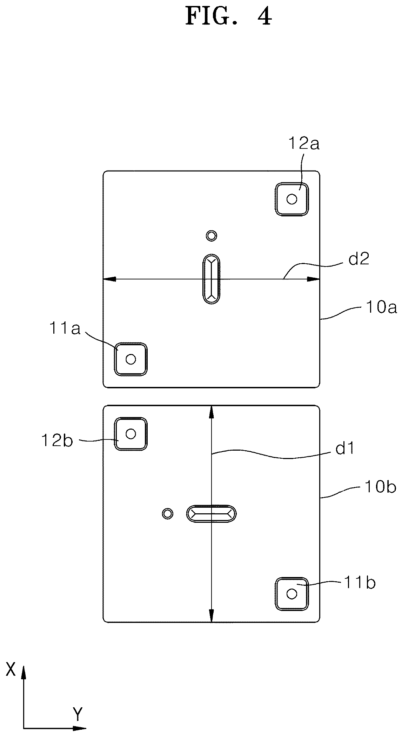

FIG. 1 is a perspective view schematically illustrating a battery module according to an embodiment of the present disclosure, FIG. 2 is a perspective view schematically illustrating an example of a battery cell of the battery module of FIG. 1, FIG. 3 is a cross-sectional view schematically illustrating an example of a cross-section taken along line III-III' of FIG. 2, and FIG. 4 is a plan view schematically illustrating an example of a first battery cell and a second battery cell according to an embodiment of the present disclosure.

Referring to FIGS. 1 to 4, a battery module 100 according to an embodiment of the present disclosure includes a terminal, including a first terminal 11 and a second terminal 12, and may include a plurality of battery cells 10 arranged in parallel along a first direction X and a bus bar 20 electrically connecting one of the battery cell 10a to another battery cell 10b adjacent thereto.

The battery cells 10 may each include a battery case 15, an electrode assembly accommodated within the battery case 15, and an electrolyte. The electrode assembly and the electrolyte react electrochemically to generate energy.

On one side of the battery cell 10, the first terminal 11 and the second terminal 12 are each electrically connected to the bus bar 20 and a vent 13 as a discharge passageway for gas generated internally may be provided. The first terminal 11 and the second terminal 12 of the battery cell 10 may be a first terminal 11 and a second terminal 12 having different polarities. In some embodiments, when the first terminal 11 is a positive electrode terminal, the second terminal 12 may be a negative electrode terminal. In some embodiments, when the first terminal 11 is a negative electrode terminal, the second terminal 12 may be a positive electrode terminal. In this description, the first terminal 11 is described as a positive electrode terminal and the second terminal 12 is described as a negative electrode terminal, but the first terminal 11 may be positive or negative and the second terminal 12 may be negative or positive, respectively.

The first terminal 11 and the second terminal 12 of adjacent of the battery cells 10 may be electrically connected in series and/or in parallel by bus bars 20. In some embodiments, a first terminal 11 of one battery cell 10a may be electrically connected to a second terminal 12 of another adjacent of the battery cell 10b by a bus bar 20, and a second terminal 12 of one battery cell 10a may be electrically connected to a first terminal 11 of another adjacent of the battery cell 10b by another bus bar 20.

FIG. 1 illustrates that the battery cells 10 are connected in series, but various connection structures may be adopted as needed. In some embodiments, the number and arrangement of battery cells 10 may be changed as needed.

In some embodiments, a plurality of battery cells 10 arranged along the first direction X may be accommodated by a housing 60. The housing may include a pair of end plates 61 and 62 arranged at the outermost sides of the battery cells 10, a pair of side plates 63 connected to the pair of end plates 61 and 62 and covering side surfaces of the battery cells 10, and a bottom plate 64 supporting bottom surfaces of the battery cells 10.

The pair of end plates 61 and 62, side plates 63 and bottom plate 64 may be coupled to each other using elements such as a bolt, but any method that may be used for coupling thereto is possible.

The end plates 61 and 62 have elasticity, and when the battery cell 10 expands depending on the charging and discharging operation of the battery cell 10 (hereinafter, referred to as "swelling"), the end plates 61 and 62 absorb the pressure caused by the expansion of the battery cells 10 (hereinafter, referred to as "swelling force"),thereby preventing the performance deterioration of the battery cells 10 and improving the structural stability of the battery module 100.

In some embodiments, the battery module 100 may further include a cover part 140 covering the plurality of battery cells 10. The housing 60 and the cover part 140 may be coupled to each other using coupling elements such as a bolt, but any method that may be used for coupling thereto is possible. The housing 60 and the cover part 140 may be coupled to each other to form an internal space, and the plurality of battery cells 10 may be accommodated within the internal space.

Therefore, a material of the housing 60 and the cover part 140 need to be a material that can protect the plurality of battery cells 10 from mechanical shock or thermal shock. The material of the housing 60 and the cover part 140 may include at least one of acrylonitrile butadiene styrene (ABS), polycarbonate (PC), polypropylene (PP), aluminum, or stainless steel, but this may vary.

In some embodiments, the battery cell 10 according to an embodiment of the present disclosure may include a first electrode plate 211, a second electrode plate facing the first electrode plate 211, a separator between the first electrode plate 211 and the second electrode plate, and a case 15 configured to accommodate the first electrode plate 211, the second electrode plate and the separator and is filled with an electrolyte.

The first electrode plate 211 and the second electrode plate of the battery cell 10 may have different polarities. In some embodiments, when the first electrode plate 211 is a positive electrode, the second electrode plate may be a negative electrode. In some embodiments, when the first electrode plate 211 is a negative electrode, the second electrode plate may be a positive electrode. That is, the first electrode plate 211 and the second electrode plate have different electrical polarities.

The battery cell 10 according to the present embodiment is illustrated as a prismatic type. However, the present disclosure may be applied to various types of battery cells such as pouch battery cells or cylindrical battery cells.

The first electrode plate 211 and the second electrode plate may include a coated portion, which is an area where an active material is applied to a current collector including a thin metal foil, and uncoated portions 211a and 212a, which are areas where the active material is not coated.

The first electrode plate 211 and the second electrode plate may include at least one of electrode assembly which is alternately stacked along a thickness direction X or Y of the battery cell 10 with the separator therebetween. However, a stacking direction of the electrode assembly may be a height direction Z of the battery cell 10.

The case 15 forms the overall appearance of the battery cell 10 and may include a conductive metal such as aluminum, an aluminum alloy, or nickel-plated steel. In some embodiments, the case 15 may provide a space in which the electrode assembly is accommodated.

The battery cell 10 may include a cap plate 17 covering an opening of the case 15, and the case 15 and the cap plate 17 may have a conductive material. Here, the first terminal 11 and the second terminal 12 electrically connected to the first electrode plate 211 or the second electrode plate may be provided to protrude outwardly through the cap plate 17.

In some embodiments, the outer circumferential surface of an upper pillar of the first terminal 11 and the second terminal 12 protruding outward from the cap plate 17 may be threaded and fixed to the cap plate 17 with a nut.

However, the first terminal 11 and the second terminal 12 may have a rivet structure and may be riveted, or may be welded to the cap plate 17.

In some embodiments, the cap plate 17 may include a thin plate coupled to the opening of the case 15, the electrolyte injection port 14 configured to receive a sealing plug may be provided in the cap plate 17, and the vent 13 having a notch may be provided.

Although FIGS. 1 to 4 illustrate that the vent 13 and the electrolyte injection port 14 are formed on the top surface of the battery cell 10, the position and shape of the vent 13 and the electrolyte injection port 14 may vary. In some embodiments, the vent 13 and the electrolyte injection port 14 may be formed on the bottom surface of the battery cell 10, which is opposite to the surface where the first terminal 11 and the second terminal 12 of the battery cell 10 are arranged.

The first terminal 11 and the second terminal 12 may be electrically connected to the current collector including a first current collector 240 and a second current collector 250 that are welded to the first uncoated portion 211a and the second uncoated portion 212a.

In some embodiments, the first terminal 11 and the second terminal 12 may be secured to the first current collector 240 and the second current collector 250 by welding, respectively. However, the first terminal 11, the second terminal 12, the first current collector 240 and the second current collector 250 may be formed by being integrally formed (e.g., may be a monolithic structure).

In some embodiments, an insulating element may be provided between the electrode assembly and the cap plate 17. Here, the insulating element may include first and second lower insulating elements 260 and 270, and each of the first and second lower insulating elements 260 and 270 may be provided between the electrode assembly and the cap plate 17.

In some embodiments, according to the present embodiment, one end of a separating element that may be provided facing one side of the electrode assembly may be provided between the insulating element and the first terminal 11 and the second terminal 12.

Here, the separating element may include first and second separating elements 280 and 290.

Therefore, one end of the first and second separating elements 280 and 290 that may be provided facing one side of the electrode assembly may be provided between the first and second lower insulating elements 260 and 270 and the first terminal 11 and the second terminal 12.

Finally, the first terminal 11 and the second terminal 12 welded to the first current collector 240 and the second current collector 250 may be coupled to one end of the first and second lower insulating elements 260 and 270 and the first and second separating elements 280 and 290, respectively.

In some embodiments, each of the battery cells 10 according to an embodiment of the present disclosure has an upper surface having a square shape, and the first terminal 11 and the second terminal 12 may be arranged symmetrically with respect to a center C of the upper surface.

In some embodiments, the plurality of battery cells 10 may include a first battery cell 10a and a second battery cell 10b adjacent to each other. The first battery cell 10a and the second battery cell 10b may be arranged alternately (e.g., may be alternated) along the first direction X. In some embodiments, the second battery cell 10b may have a shape in which the first battery cell 10a is rotated by 90 degrees (e.g., the second battery cell 10b is identical to the first battery cell 10a, except that the second battery cell 10b is rotated by 90 degrees with respect to the first battery cell 10a, in order to make the respective directions of swelling of the first battery cell 10a and the second battery cell 10b be perpendicular to each other, thereby reducing the chance of a rupture; this rotation can be seen, for example, in FIG. 4, as evidenced by the vents pointing 90 degrees from each other).

The stacking direction of the first electrode plate, the second electrode plate and the separator of the first battery cell 10a may be perpendicular to the stacking direction of the first electrode plate, the second electrode plate and the separator of the second battery cell 10b. Accordingly, a swelling direction of the first battery cell 10a and a swelling direction of the second battery cell 10b may be perpendicular to each other.

In some embodiments, referring to FIG. 4, a swelling direction d2 of the first battery cell 10a may be parallel to a second direction Y. In some embodiments, a swelling direction d1 of the second battery cell 10b may be parallel to the first direction X that is perpendicular to the swelling direction d2 of the first battery cell 10a.

In some embodiments, when the battery cell 10 swells, a center portion of the battery cell 10 may expand, causing a lifting phenomenon at a welded joint between the case 15 and the cap plate 17, so that the joint between the case 15 and the cap plate 17 may be broken.

As in the conventional case, when the upper surface of the battery cell 10 is rectangular and the swelling direction of adjacent of the battery cells 10 is the same, the swelling phenomenon of the battery cells 10 may become greater as charging and discharging are repeated, so that swelling force may be continuously accumulated in the end plates 61 and 62.

As a result, the end plates 61 and 62 may be bent convexly outwardly along the first direction X, the effect of the end plates 61 and 62 pressing the plurality of battery cells 10 may be reduced, thereby deteriorating the performance and stability of the battery module 100, and the joint area between the case 15 of the battery cell 10 and the cap plate 17 may be damaged by swelling force.

However, as in an embodiment of the present disclosure, when the swelling direction of the first battery cell 10a and the second battery cell 10b is perpendicular to each other, the accumulation of swelling force applied to the end plates 61 and 62 may be prevented. As a result, the load applied to the end plates 61 and 62 may be reduced, so that the joint area between the case 15 and the cap plate 17 of the battery cell 10 may be prevented from being damaged by swelling force, thereby improving the structural stability of the battery module 100.

In some embodiments, although FIG. 4 illustrates that the first battery cell 10a has a shape in which the second battery cell 10b is rotated by 90 degrees in a clockwise direction, but when the stacking direction of the electrode assembly of the first battery cell 10a and the second battery cell 10b adjacent to each other are perpendicular to each other and the swelling direction of the first battery cell 10a and the second battery cell 10b are perpendicular to each other, the shapes and arrangements of the vent 13 and the electrolyte injection port 14 may vary. In some embodiments, the first battery cell 10a may have a shape in which the second battery cell 10b is rotated by 90 degrees in a counterclockwise direction.

As in an embodiment of the present disclosure, when the shape of the upper surface of the plurality of battery cells 10 is square-shaped, even if the first battery cell 10a and the second battery cell 10b which are adjacent to each other and have the swelling direction perpendicular to each other are arranged alternately along the first direction X, the arrangement of the plurality of battery cells 10 may be structurally stable.

When the shape of the upper surface of the plurality of battery cells 10 is not square-shaped, when the first battery cell 10a and the second battery cell 10b are arranged alternately along the first direction X, an empty space may be created inside the battery module 100, so that the integration density of the battery module 100 may be reduced. In some embodiments, when connecting the terminal 11a of the first battery cell 10a to the second terminal 12a of the second battery cell 10b with the bus bar 20, there is a risk that the bus bar 20 may be damaged when the bus bar 20 is exposed to the empty space and movement occurs in the battery module 100.

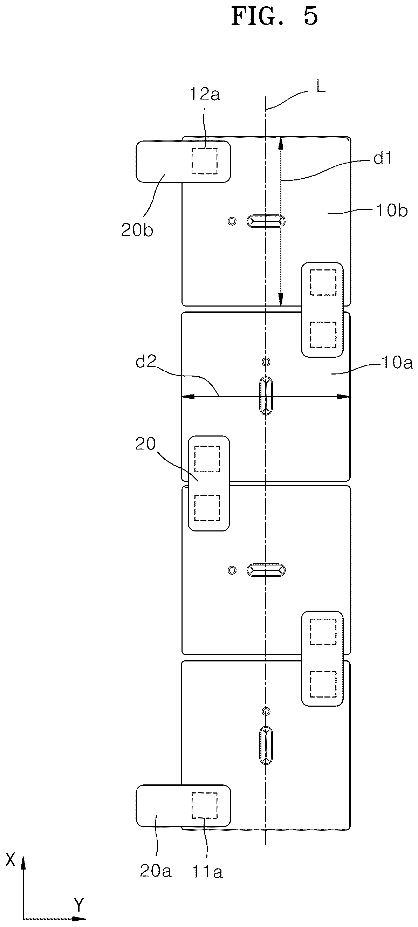

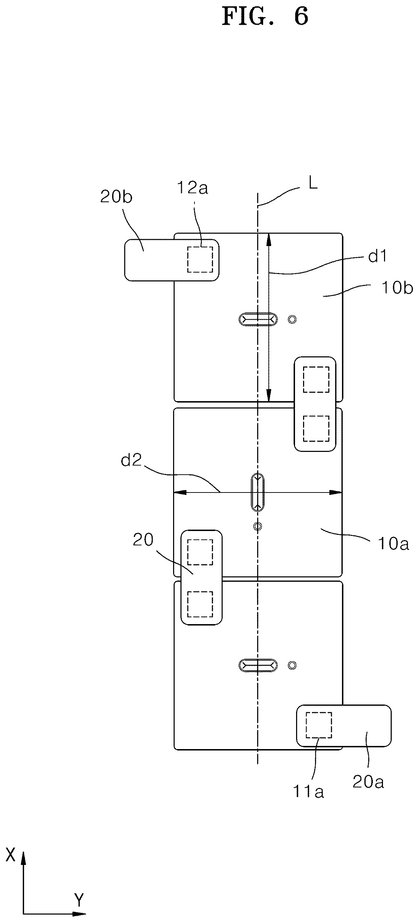

FIG. 5 is a plan view schematically illustrating an example of an arrangement of battery cells of a battery module according to an embodiment of the present disclosure, and FIG. 6 is a plan view schematically illustrating an example of an arrangement of battery cells of a battery module according to another embodiment of the present disclosure.

Referring to FIGS. 5 and 6, each of the battery cells 10 according to an embodiment of the present disclosure has the square-shaped upper surface, and the first terminal (11 of FIG. 2) and the second terminal (12 of FIG. 2) may be arranged symmetrically with respect to the center of the upper surface. In some embodiments, the plurality of battery cells 10 may include a first battery cell 10a and a second battery cell 10b adjacent to each other. The first battery cell 10a and the second battery cell 10b may be arranged alternately along the first direction X. In some embodiments, the second battery cell 10b may have a shape in which the first battery cell 10a is rotated by 90 degrees. In some embodiments, the second battery cell 10b may have a shape in which the first battery cell 10a is rotated by 90 degrees in a counterclockwise direction. However, this is only an example, and the second battery cell 10b may have a shape in which the first battery cell 10a is rotated by 90 degrees in a clockwise direction.

Among the plurality of battery cells 10, two battery cells arranged at outermost positions may each include terminals 11a and 12a. The terminals 11a and 12a may be terminals that transmit power generated by the plurality of battery cells 10 to the outside of the battery module or to adjacent battery modules. In some embodiments, the terminals 11a and 12a may each be connected to high voltage bus bars 20a and 20b. In some embodiments, the high voltage bus bars 20a and 20b may be connected to a battery management system (BMS), an inverter, a converter, or other battery modules.

In some embodiments, as illustrated in FIG. 5, when the number of battery cells 10 arranged along the first direction X is an even number, the terminals 11a and 12a of the battery module may be arranged on the same side with respect to a virtual line L that is parallel to the first direction X and passes through centers of the plurality of battery cells 10.

In some embodiments, as illustrated in FIG. 6, when the number of battery cells 10 arranged along the first direction X is an odd number, the terminals 11a and 12a of the battery module may be arranged on the opposite side with respect to a virtual line L that is parallel to the first direction X and passes through centers of the plurality of battery cells 10.

As described above, regardless of the number of battery cells 10 arranged along the first direction X, even if each of the battery cells 10 has the square-shaped upper surface and the first terminal 11 and the second terminal 12 are arranged symmetrically with respect to the center of the upper surface, the arrangement of the plurality of battery cells 10 and the arrangement of the terminals 11a and 12a according to this arrangement may be free, so that the convenience of the battery module process may be improved.

In some embodiments of the present disclosure, when the swelling direction of the first battery cell 10a and the second battery cell 10b is perpendicular to each other, the accumulation of swelling force applied to the end plates may be prevented. As a result, the load applied to the end plates may be reduced, so that the joint area between the case and the cap plate of the battery cell 10 may be prevented from being damaged by swelling force, thereby improving the structural stability of the battery module.

In some embodiments, in FIG. 5, the number of battery cells 10 arranged along the first direction X is illustrated as four, and in FIG. 6, the number of battery cells 10 arranged along the first direction X is illustrated as three, but the number of battery cells 10 included in the battery module may vary.

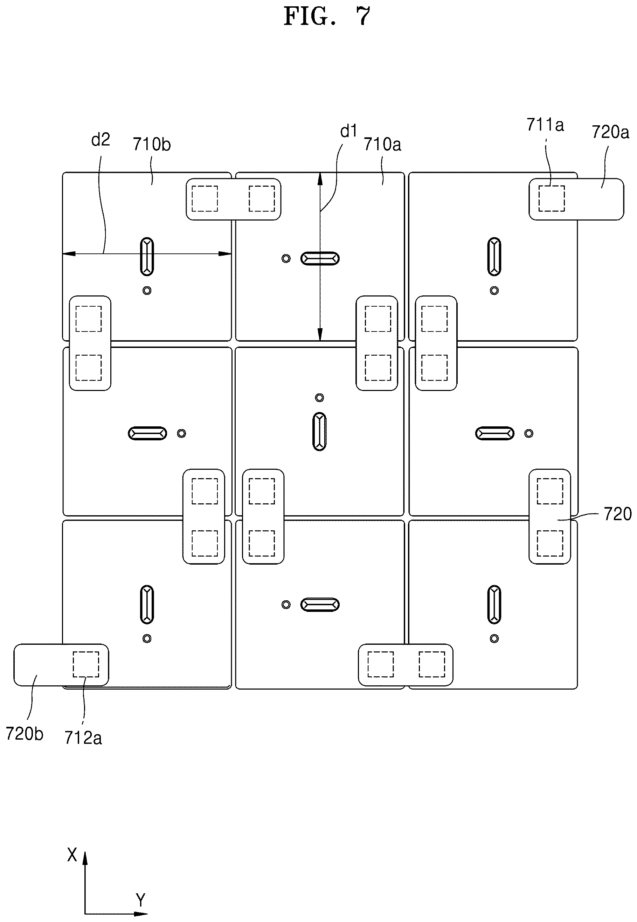

FIG. 7 is a plan view schematically illustrating an example of an arrangement of battery cells of a battery module according to a further embodiment of the present disclosure.

Referring to FIG. 7, each of the battery cells 710a and 710b according to an embodiment of the present disclosure has the square-shaped upper surface, and the first terminal (11 of FIG. 2) and the second terminal (12 of FIG. 2) may be arranged symmetrically with respect to the center of the upper surface. In some embodiments, the plurality of battery cells 710a and 710b may include a first battery cell 710a and a second battery cell 710b adjacent to each other. In some embodiments, the second battery cell 710b may have a shape in which the first battery cell 710a is rotated by 90 degrees.

The plurality of battery cells 710a and 710b includes a plurality of rows arranged in parallel along the first direction X, and the rows may be arranged in parallel along the second direction Y perpendicular to the first direction X.

In some embodiments, as illustrated in FIG. 7, the plurality of battery cells 710a and 710b of the battery module according to an embodiment of the present disclosure may be arranged in three rows and three columns. However, the number of battery cells 710a and 710b arranged in each row and the number of battery cells 710a and 710b arranged in each column may be changed as needed.

The first battery cell 710a and the second battery cell 710b may be arranged adjacent to each other in the first direction X and the second direction Y. In some embodiments, the second battery cells 710b may be arranged on a surface which is adjacent to four sides of the first battery cell 710a.

The stacking direction of the first electrode plate, the second electrode plate and the separator of the first battery cell 710a may be perpendicular to the stacking direction of the first electrode plate, the second electrode plate and the separator of the second battery cell 710b. Accordingly, the swelling direction of the first battery cell 710a and the second battery cell 710b may be perpendicular to each other.

In some embodiments, referring to FIG. 7, a swelling direction d1 of the first battery cell 710a may be parallel to the first direction X. In some embodiments, a swelling direction d2 of the second battery cell 710b may be parallel to the second direction Y that is perpendicular to the swelling direction d1 of the first battery cell 710a.

As described above, when the swelling direction of adjacent of the battery cells 710a and 710b is perpendicular to each other, swelling force may not be accumulated. As a result, the accumulation of swelling force applied to the end plate may be prevented. Therefore, the load applied to the end plates may be reduced, so that the joint area between the cases and the cap plates of the battery cells 710a and 710b may be prevented from being damaged by swelling force, thereby improving the structural stability of the battery module.

In some embodiments, among the plurality of battery cells 710a and 710b, two battery cells arranged at outermost positions may each include terminals 711a and 712a. The terminals 711a and 712a may be terminals that transmit power generated by the plurality of battery cells 710a and 710b to the outside of the battery module or to adjacent battery modules. In some embodiments, the terminals 711a and 712a may each be connected to high voltage bus bars 720a and 720b, respectively. In some embodiments, the high voltage bus bars 720a and 720b may be connected to a battery management system (BMS), an inverter, a converter, or other battery modules.

The positions and arrangements of the terminals 711a and 712a and the high voltage bus bars 720a and 720b respectively connected to the terminals 711a and 712a may vary from that of FIG. 7, and the terminals 711a and 712a and the high voltage bus bars 720a and 720b respectively connected to the terminals 711a and 712a may have various positions and arrangements as long as the power generated by the battery cells 710a and 710b may be transmitted to the outside of the battery module or to adjacent battery modules.

According to embodiments of the present disclosure, a battery module includes first battery cells and second battery cells, which each have an upper surface having a square shape and are arranged adjacent to each other, wherein the second battery cells each have a shape in which the first battery cell is rotated by 90 degrees, thereby preventing accumulation of swelling force and improving the structural stability of the battery module.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A battery module, comprising:
a plurality of battery cells (10) each including a first terminal (11) and a second terminal (12) respectively having different polarities; and
a bus bar (20) electrically connecting the plurality of battery cells (10) to each other,
wherein:
each of the plurality of battery cells (10) has an upper surface having a square shape, and
the first terminal (11) and the second terminal (12) are symmetrical with respect to a center of the upper surface.

2. The battery module as claimed in claim 1, wherein:
the plurality of battery cells (10) include a first battery cell (10a; 710a) and a second battery cell (10b; 710b) which are adjacent to each other, and
the second battery cell (10b; 710b) has a shape of the first battery cell (10a; 710a) rotated by 90 degrees.

3. The battery module as claimed in claim 2, wherein the bus bar (20) connects the first terminal (11a) of the first battery cell (10a) to the second terminal (12a) of the second battery cell (10b).

4. The battery module as claimed in claim 2 or claim 3, wherein the first battery cell (10a) and the second battery cell (10b) are alternated along a first direction (X).

5. The battery module as claimed in claim 4, wherein when a number of a plurality of battery cells (10) along the first direction (X) is an odd number, terminals (11a; 12a) of the battery module are on an opposite side with respect to a virtual line (L) that is parallel to the first direction (X) and passes through centers of the plurality of battery cells (10).

6. The battery module as claimed in claim 4, wherein when a number of a plurality of battery cells (10) along the first direction (X) is an even number, terminals (11a; 12a) of the battery module are on a same side with respect to a virtual line (L) parallel to the first direction (X), the terminals (11a; 12a) passing through centers of the plurality of battery cells.

7. The battery module as claimed in any one of claims 2 to 6, wherein the first battery cell (10a) and the second battery cell (10b) each include:
a first electrode plate (211),
a second electrode plate facing the first electrode plate, and
a separator between the first electrode plate (211) and the second electrode plate.

8. The battery module as claimed in claim 7, wherein a stacking direction of the first electrode plate (211), the second electrode plate and the separator of the first battery cell (10a) is perpendicular to a stacking direction of the first electrode plate, the second electrode plate and the separator of the second battery cell (10b).

9. The battery module as claimed in any one of claims 2 to 8, wherein a swelling direction (d2) of the first battery cell (10a) and a swelling direction (d1) of the second battery cell (10b) are perpendicular to each other.

10. The battery module as claimed in any one of claims 1 to 9, wherein among the plurality of battery cells (10), two battery cells at outermost positions each include terminals.

11. The battery module as claimed in claim 10, wherein:
the plurality of battery cells (10) are in a row along a first direction (X), and
terminals included in each of the two battery cells are on a same side with respect to a virtual line (L) that is parallel to the first direction (X) and passes through centers of the plurality of battery cells (10).

12. The battery module as claimed in claim 10, wherein:
the plurality of battery cells (10) are in a row along a first direction (X), and
terminals included in each of the two battery cells are on an opposite side with respect to a virtual line (L) that is parallel to the first direction (X) and passes through centers of the plurality of battery cells (10).

13. The battery module as claimed in any one of claims 1 to 12, wherein the plurality of battery cells (10) are connected to each other in series.

14. The battery module as claimed in any one of claims 1 to 13, wherein:
the plurality of battery cells (10) include a plurality of rows in parallel along a first direction (X), and
the plurality of rows are in parallel to each other along a second direction (Y) perpendicular to the first direction (X).
